# EUROPÄISCHE PATENTANMELDUNG

(11) **EP 3 189 887 A1**
(43) Veröffentlichungstag der Anmeldung: **12.07.2017**
(21) Anmeldenummer: 16179640.4
(22) Anmeldetag: 15.07.2016
(51) Int. Cl.: B01F 5/06, B01J 19/10

(54) **KAVITATIONSREAKTOR ZUM BEHANDELN VON FLIESSFÄHIGEN SUBSTANZEN**

(30) Priorität: 29.12.2015 EP 15202998
(71) Anmelder: AVARUS Suisse Holding AG, 6052 Hergiswil NW (CH)
(72) Erfinder: Schüler, Rolf, 85258 Weichs (DE)
(74) Vertreter: Puschmann Borchert Bardehle Patentanwälte Partnerschaft mbB

(57) **Zusammenfassung**

Ein Kavitationsreaktor zum Behandeln einer fließfähigen Substanz, die aus wenigstens zwei vorgemischten Reaktionskomponenten besteht, die aufgemischt und zur Reaktion gebracht werden, mit einem rohrförmigen Gehäuse (2,32), in dem ein schwer umströmbaren Reaktormodul (6,34) unter Bildung eines Ringraumes (8,35) zwischen dem Reaktormodul (6,34) und dem Gehäuse (2,32) über eine Halterung (60) angeordnet ist, einer Eingangsöffnung (10, 37) für die Zufuhr eines Massestromes, der die zu vermischenden und/oder reagierenden Komponenten enthält, und eine Ausgangsöffnung (12, 39) für die Abgabe des aus der behandelten Substanz bestehenden Massestroms, wobei der Reaktormodul (6,34) mehrere schwer umströmbare Scheibenelemente (14;36,46,48), die jeweils eine lokale Strömungseinengung bilden und von einender beabstandet sind, und Zwischenscheiben (16;55,57) zwischen den Scheibenelementen (14;36,46,48) aufweist, ist dadurch gekennzeichnet, dass die Scheibenelemente (14;36,46,48) jeweils mehrere radial verlaufende durch das jeweilige Scheibenelement (14;36,46,48) hindurch gehende Schlitze (18) aufweist, und dass die Zwischenascheiben (16;55,57) die Schlitze (18) der Scheibenelemente (14;36,46,48) wenigstens teilweise überdecken.

## Beschreibung

Die Erfindung betrifft einen Kavitationsreaktor zum Behandeln von fließfähigen Substanzen, die aus wenigstens zwei Komponenten besteht, die aufgemischt und/oder zur Reaktion gebracht werden.

Hydrodynamische Durchflussreaktoren der eingangs genannten Art, die auf der Basis von Kavitation arbeiten, sind aus der DE 10310 442 A1 bekannt. Die Durchflussreaktoren können durch eine entsprechende Anordnung von schwer umströmbaren Körper als Superkavitationsreaktoren ausgebildet werden. Hierbei handelt es sich meist um statische Komponenten, die durch Versuche für die jeweiligen festen, flüssigen und/oder gasförmigen Strömungs-Komponenten optimiert werden müssen. Eine Regulierungsfunktion wird dann durch Variation des Vordrucks bzw. Verschiebung der die Turbulenzen erzeugenden Elemente erreicht. Bei diesen hydrodynamischen Durchflussreaktoren nach dem Stand der Technik ist daher die Auslegung und die Handhabung umständlich, und den Gegebenheiten diverser Anwendungen kann nur begrenzt Rechnung getragen werden.

DE 100 09 326 betrifft eine Vorrichtung zum Vermischen der Komponenten eines hindurchströmenden Massestromes, wobei die Komponenten insbesondere flüssig oder gasförmig sein können, mittels einem hydrodynamischen Superkavitationsfeld, um eine Mischung, insbesondere eine Emulsion oder Suspension, zu erzeugen. Die Vorrichtung hat ein Gehäuse, das eine Eingangsöffnung für die Zufuhr mindestens eines Teils des zu vermischenden Massestromes und eine Ausgangsöffnung für die Entnahme des Massestromes aufweist; wobei das Gehäuse eine Durchflusskammer mit einem darin mittels einer Halterung angeordneten schwer umströmbaren Körper aufweist, und der schwer umströmbare Körper mindestens zwei schwer umströmbare Teilbereiche besitzt, die für jeweils eine lokale Strömungseinengung sorgen. Der Querschnitt der Durchflusskammer, der senkrecht zu ihrer Mittelachse genommen wird, soll wenigstens in einem Teil eines Bereichs, der den schwer umströmbaren Körper umgibt, in Strömungsrichtung größer werden. Der schwer umströmbare Körper umfasst mehrere schwer umströmbare, scheibenförmige, von einander beabstandete Teilkörper.

Der Erfindung liegt die Aufgabe zu Grunde, einen Kavitationsreaktor zum Behandeln einer fließfähigen Substanz, die aus wenigstens zwei vorgemischten Reaktionskomponenten besteht, die aufgemischt und zur Reaktion gebracht werden, in Bezug auf Effizienz zu verbessern.

Dazu ist der erfindungsgemäße Kavitationsreaktor zum Behandeln von fließfähigen Substanzen, die aus wenigstens zwei vorgemischten Komponenten besteht, die aufgemischt und/oder zur Reaktion gebracht werden, umfassend ein rohrförmiges Gehäuse, in dem ein schwer umströmbaren Reaktormodul unter Bildung eines Ringraumes zwischen dem Reaktormodul und dem Gehäuse angeordnet ist, eine Eingangsöffnung für die Zufuhr eines Massestromes, der die zu vermischenden und/oder reagierenden Komponenten enthält, und eine Ausgangsöffnung für die Abgabe des aus der behandelten Substanz bestehenden Massestroms, wobei der Reaktormodul mehrere schwer umströmbare Scheibenelemente, die jeweils eine lokale Strömungseinengung bilden und von einander beabstandet sind, und Zwischenscheiben zwischen den Scheibenelementen aufweist, dadurch gekennzeichnet, dass die Scheibenelemente jeweils mehrere radial verlaufende, durch das jeweilige Scheibenelement hindurch gehende Schlitze aufweist, und dass die Zwischenascheiben die Schlitze der Scheibenelemente wenigstens teilweise überdecken.

Durch das Maß der Überdeckung der Schlitze durch die Zwischenscheiben wird, wie Experimente nachgewiesen haben, das Ausmaß der Zerkleinerung von in der Substanz enthaltenen Festteilchen oder Zusammenballungen beeinflusst in dem Sinne, dass mit zunehmender Überdeckung die Größe der erzeugten Festteilchen oder Zusammenballungen kleiner wird. So werden beispielsweise Farben-Pasten behandelt, die bekanntlich feste Teilchen als Pigment enthalten. Damit der Kavitationsreaktor auf unterschiedliche Substanzen eingestellt werden kann, ist es vorteilhaft, dass die Scheibenelemente und die Zwischenscheiben separat voneinander ausgebildet sind, so dass die Scheibenelemente und die Zwischenscheiben je nach Bedarf ausgetauscht werden können.

Nach einer vorteilhaften Ausführungsform ist der Kavitationsreaktor dadurch gekennzeichnet, dass die Scheibenelemente und die Zwischenscheiben an einem Bolzen gestapelt und befestigt sind, der über die Halterung mit dem Gehäuse verbunden ist. Dadurch wird in vorteilhafter Weise der vorstehend erwähnte Austausch der Zwischenscheiben einfach gestaltet.

Nach einer weiteren vorteilhaften Ausführungsform ist der Kavitationsreaktor dadurch gekennzeichnet, dass der Reaktormodul zwei Teilbereiche umfasst, wobei die Scheibenelemente des stromauf liegenden Teilbereichs weiter von dem Gehäuse beabstandet sind als in dem stromab liegenden und daneben angeordneten Teilbereich. Dadurch ergibt sich an dem stromauf liegenden Teilbereich ein Ringraum oder Durchflussraum mit einer größeren Querschnittsfläche als der Ringraum oder Durchflussraum an dem stromab liegenden Teilbereich, wobei in vorteilhafter Weise der Übergang an dem kleineren Ringraum ein Rückstau entsteht, indem ein Teil der Strömung der Substanz in der Haupt Flussrichtung weitergeleitet und ein Teil der Strömung der Substanz im Rückstau entgegen der Hauptflussrichtung geleitet wird, wobei die Fließgeschwindigkeiten von der Querschnittsfläche der entsprechenden Regenräume zwischen den Teilbereichen und den gegenüberliegenden Wandbereichen beeinflusst werden. Dadurch wird eine zusätzliche Intensivierung der Kavitation in der Substanz erreicht.

Nach einer weiteren vorteilhaften Ausführungsform ist der Kavitationsreaktor dadurch gekennzeichnet, dass der Reaktormodul drei Teilbereiche umfasst, wobei ein erster stromauf liegender Teilbereich Scheibenelemente mit in Strömungsrichtung zunehmendem radialen Durchmesser bis zu einem ersten Durchmesserwert aufweist, wobei ein zweiter stromab von dem ersten Teilbereich liegender Teilbereich Scheibenelemente mit in Strömungsrichtung zunehmendem radialen Durchmesser bis zu einem zweiten Durchmesserwert aufweist, und wobei ein dritter stromab von dem zweiten Teilbereich liegender Teilbereich Scheibenelemente mit in Strömungsrichtung konstantem Durchmesser bei einem dritten Durchmesserwert aufweist, wobei der zweite Durchmesserwert größer ist als der erste Querschnittwert, und dass der dritte Durchmesserwert größer ist als der zweite Durchmesserwert. Durch die Aufteilung des Reaktormoduls in derartige Teilbereiche wird in vorteilhafter Weise eine bessere Kontrolle der Fließgeschwindigkeiten an den Teilbereichen möglich, wobei die Fließgeschwindigkeiten von der Querschnittsfläche der entsprechenden Reaktionsräume zwischen den Teilbereichen und den gegenüberliegenden Wandbereichen beeinflusst werden.

Nach einer weiteren vorteilhaften Ausführungsform ist der Kavitationsreaktor dadurch gekennzeichnet, dass das Gehäuse in den Bereichen des ersten und zweiten Teilbereichs den Durchmessern der Scheibenelemente angepasst ist, wobei vorzugsweise die Anpassung in dem zweiten Teilbereich darin besteht, das der Abstand der Scheibenelemente zu einer konischen Innenfläche des Gehäuses konstant ist, und wobei die Anpassung in dem ersten Teilbereich darin besteht, dass der Abstand von einem stromab liegenden Teil der der Scheibenelemente zu einer konischen Innenfläche des Gehäuses konstant ist, während ein stromauf liegender Teil der der Scheibenelemente, deren Durchmesser in Richtung stromauf abnimmt, in einer zylindrischen Innenfläche des Gehäuses liegt. Durch diese Anpassungen lässt sich ein vorteilhaftes Profil für die Fließgeschwindigkeiten in den verschiedenen Teilbereichen einstellen. Außerdem bilden in vorteilhafter Weise der erste Teilbereich und der zweite Teilbereich quasi Vorstufen für die Verarbeitung in dem dritten Teilbereich, indem die Durchmesser der Scheibenelemente in dem ersten Teilbereich und dem zweiten Teilbereich jeweils in Strömungsrichtung zunehmen, wodurch die Ringsräume zwischen den Teilbereichen und den jeweiligen Wandabschnitten entsprechend abgestimmt sind.

Nach einer weiteren vorteilhaften Ausführungsform ist der Kavitationsreaktor dadurch gekennzeichnet, dass das Gehäuse stromauf von dem Reaktormodul einen in Strömungsrichtung sich verengenden Zulauftrichter umfasst, wodurch die Substanz stromauf von dem Kavitationsreaktor aufgestaut und dann wie über eine Düse in den Kavitationsreaktor eingeleitet wird.

Nach einer weiteren vorteilhaften Ausführungsform ist der Kavitationsreaktor dadurch gekennzeichnet, dass das Gehäuse stromab von dem Reaktormodul einen in Strömungsrichtung sich ausdehnenden Übergangsbereich und darauf folgend eine zylindrische Innenwand aufweist, wobei die Strömung der Substanz in vorteilhafter Weise ohne Rückstau abgeleitet werden kann.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

Es zeigen:
- Figur 1: eine Schnittdarstellung eines Ausführungsbeispiels des erfindungsgemäßen Kavitationsreaktors;
- Figur 2: eine Draufsicht auf ein in dem Reaktormodul von Figur 1 verwendetes Scheibenelement mit Blickrichtung von unten in Figur 1;
- Figur 3A: einen Schnitt durch das Scheibenelement nach Figur 2 entlang einer Schnittlinie A -A in Figur 2;
- Figur 3B: einen Schnitt durch das Scheibenelement nach Figur 2 entlang einer Schnittlinie B - B in Figur 2;
- Figur 4: eine Schnittdarstellung eines zweiten Ausführungsbeispiels des erfindungsgemäßen Kavitationsreaktors;
- Figur 5: eine Draufsicht auf eine Halterung für einen Reaktormodul in dem Kavitationsreaktors nach Fig.4;
- Figur 6: einen Schnitt durch die Halterung nach Fig.5 entlang einer Schnittlinie C - C in Figur 5; und
- Figuren 7A und 7B: Schnittdarstellungen des Kavitationsreaktors nach Figur 4 in einem Einbauzustand.

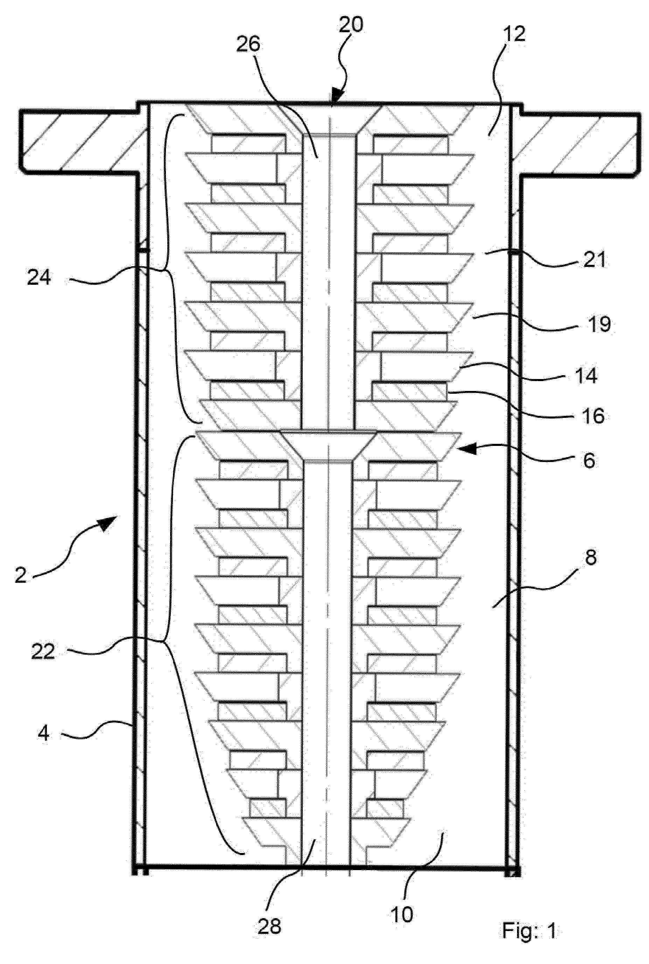

Figur 1 zeigt eine Schnittdarstellung eines ersten Ausführungsbeispiels des erfindungsgemäßen Kavitationsreaktors 2 zum Behandeln von fließfähigen Substanzen mittels Kavitation. Der Kavitationsreaktor 2 hat ein rohrförmiges Gehäuse 4, in dem ein schwer umströmbarer Reaktormodul 6 unter Bildung eines Ringraumes 8 zwischen dem Reaktormodul 6 und dem Gehäuse 4 angeordnet ist. Der Kavitationsreaktor 2 hat eine Eingangsöffnung 10 für die Zufuhr der zu vermischenden und/oder miteinander zur Reaktion zu bringenden Komponenten der Substanzen und eine Ausgangsöffnung 12 für die Abgabe des aus der behandelten Substanz bestehenden Massestroms.

Der Reaktormodul 6 umfasst mehrere schwer umströmbare Scheibenelemente 14, die jeweils mit dem Gehäuse 4 eine lokale Strömungseinengung bilden und von einander beabstandet sind, und Zwischenscheiben 16 zwischen den Scheibenelementen 14.

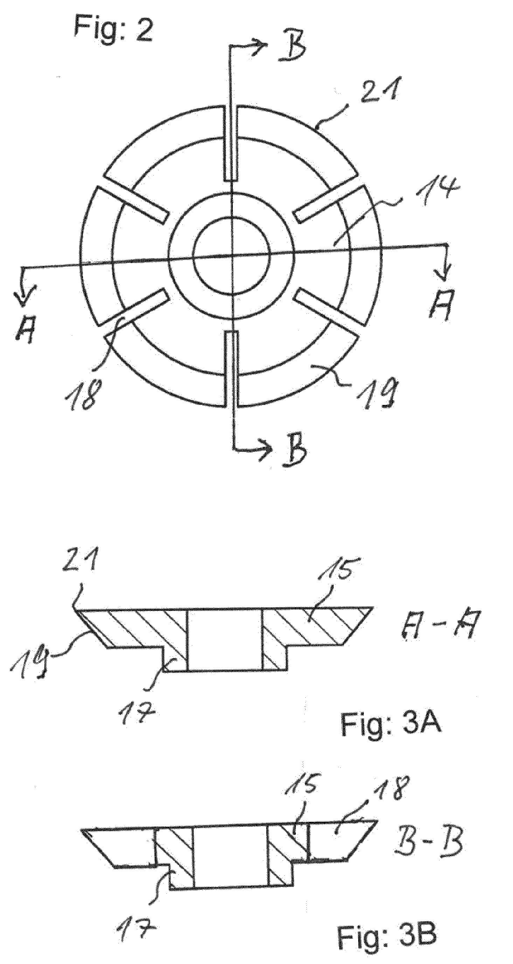

In Figur 2 ist ein Scheibenelement 14 in Draufsicht gezeigt, während Figur 3A einen Schnitt entlang der Schnittlinie A - A und Figur 3B einen Schnitt entlang der Schnittlinie B - B durch das Scheibenelement 14 nach Figur 2 zeigen. Das Scheibenelement 14 hat mehrere radial verlaufende durch das Scheibenelement 14 hindurch gehende Schlitze 18, wie in den Figuren 2 und 3B gezeigt ist. Die Scheibenelemente 14 haben jeweils eine Scheibe 15 und einen Sockel 17.

Das Scheibenelement 14 hat an seinem Umfang eine unter einem Winkel zu der Scheibe 15 stehende Umfangsfläche 19, die eine Spitze 21 bildet, die im Einbauzustand auf der stromab liegenden Seite des Scheibenelementes 14 zu liegen kommt.

Die Zwischenascheiben 16 haben keine Schlitze und überdecken die Schlitze 18 der Scheibenelemente 14 wenigstens teilweise. Die Scheibenelemente 14 und die Zwischenscheiben 16 sind an einem Bolzen 20 gestapelt und befestigt, mit dem sie über eine Halterung (nicht gezeigt) mit dem Gehäuse 4 zu verbinden sind.

Der Reaktormodul 6 nach Figur 1 hat zwei Teilbereiche 22,24, wobei die Scheibenelemente 14 des stromauf liegenden, ersten Teilbereichs 22 weiter von dem Gehäuse 4 beabstandet sind als die Scheibenelemente 14 in dem stromab liegenden und daneben angeordneten, zweiten Teilbereich 24. In diesem Fall ist der Bolzen 20 zweigeteilt, wobei jeder Teilbereich 22, 24 einen Bolzenabschnitt 26,28 hat und wobei die Bolzenabschnitte 26, 28 miteinander verbunden sind.

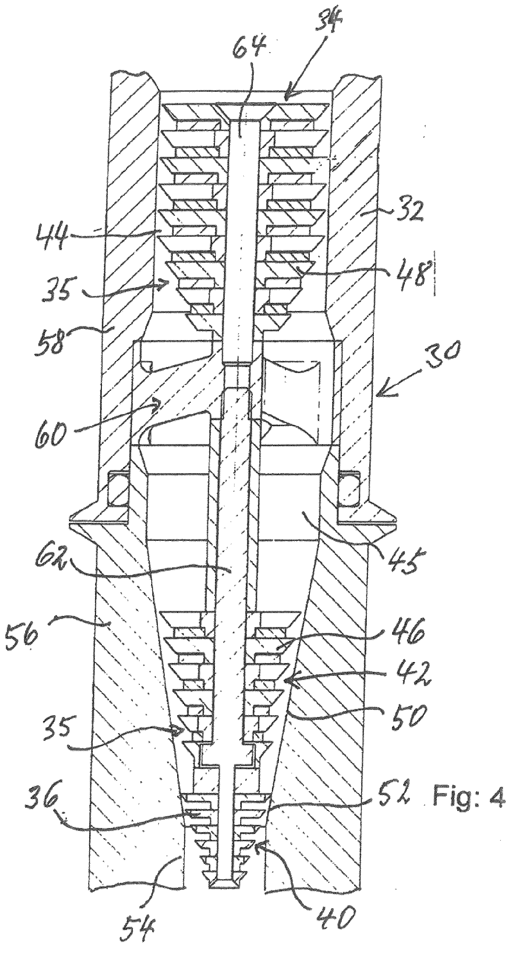

Figur 4 zeigt eine Schnittdarstellung eines zweiten Ausführungsbeispiels des erfindungsgemäßen Kavitationsreaktors 30. Der Kavitationsreaktor von Figur 4 hat ein rohrförmiges Gehäuse 32, in dem ein schwer umströmbarer Reaktormodul 34 unter Bildung eines Ringraumes 35 zwischen dem Reaktormodul 34 und dem Gehäuse 32 angeordnet ist. Der Reaktormodul 34 umfasst wiederum mehrere schwer umströmbare Scheibenelemente 36, die jeweils eine lokale Strömungseinengung zwischen dem Reaktormodul 34 und dem Gehäuse 32 bilden und von einender beabstandet sind.

Der Reaktormodul 34 hat drei Teilbereiche 40,42,44, wobei ein erster stromauf liegender Teilbereich 40 der Scheibenelemente 36 einen in Strömungsrichtung zunehmenden Durchmesser bis zu einem ersten Durchmesserwert aufweist, wobei ein zweiter stromab von dem ersten Teilbereich 40 liegender Teilbereich 42 Scheibenelemente 46 einen in Strömungsrichtung zunehmenden Durchmesser bis zu einem zweiten Durchmesserwert aufweist, und wobei ein dritter stromab von dem zweiten Teilbereich 42 liegender Teilbereich 44 Scheibenelemente 48 mit in Strömungsrichtung im Wesentlichen konstantem Durchmesser bei einem dritten Durchmesserwert aufweist.

Dabei ist der zweite Durchmesserwert größer ist als der erste Durchmesserwert, und der dritte Durchmesserwert ist größer ist als der zweite Durchmesserwert. Das Gehäuse 32 ist in den Bereichen des ersten und zweiten Teilbereichs 40 den Durchmessern der Scheibenelemente 36 angepasst. Die Anpassung in dem zweiten Teilbereich 42 besteht darin, dass der Abstand der Scheibenelemente 46 zu einer konischen Innenfläche 50 des Gehäuses 32 konstant ist. Die Anpassung in dem ersten Teilbereich 40 besteht darin, dass der Abstand von einem stromab liegenden Teil der der Scheibenelemente 36 zu einer konischen Innenfläche 52 des Gehäuses 32 konstant ist, während ein stromauf liegender Teil der der Scheibenelemente 36, deren Durchmesser in Richtung stromauf abnimmt, in einer zylindrischen Innenfläche 54 des Gehäuses 32 liegt. Durch diese Anpassungen wird in dem Ringsraum 35 zwischen dem ersten Teilbereich 40 und dem zweiten Teilbereich 43 ein Stauraum gebildet, den die Substanz als Erstes passieren muss, um ihn einen Reaktionsraum 45 zu gelangen, wo eine weitere Durchmischung der Substanz bzw. weitere Reaktionen zwischen Reaktionskomponenten der Substanz stattfinden kann/können.

Die Scheibenelemente 46 und die Zwischenscheiben 55 in dem zweiten Teilbereich 40 und die Scheibenelemente 48 und die Zwischenscheiben 57 in dem dritten Teilbereich 44 können entsprechend so ausgeführt sein wie es in den Figuren 2 und 3 im Zusammenhang mit dem ersten Ausführungsbeispiel gezeigt ist, in dem die Scheibenelemente 14 jeweils eine Scheibe 15 und einen Sockel 17 haben, mit dem sie an dem zugehörigen Bolzen angeordnet sind. Der erste Teilbereich 40 hat dagegen nur die Scheibenelemente 36 ohne Zwischenscheiben, wobei die Durchmesser und die Dicke der Scheibenelemente 36 in axialer Richtung kleiner sind als bei dem angrenzenden zweiten Teilbereich 42.

Wie aus Figur 4 zu ersehen ist, ist das Gehäuse zweigeteilt und hat einen ersten, stromauf liegenden Gehäuseteil 56 und einen zweiten von dem ersten Gehäuseteil 56 stromab liegenden, zweiten Gehäuseteil 58, der abdichtend an dem ersten Gehäuseteil 56 angesetzt ist.

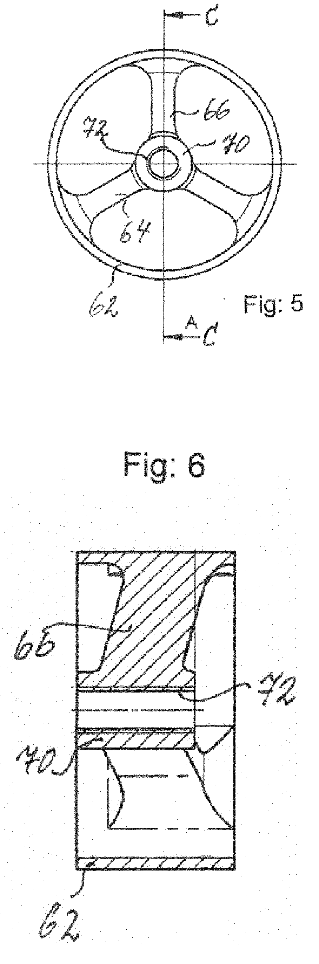

Zwischen dem ersten Gehäuseteil 56 und dem zweiten Gehäuseteil 58 ist eine Halterung 60 eingesetzt, an der ein erster Bolzen 62, der den ersten und zweiten Teilbereich 40, 42 des Reaktormoduls 34 hält, und ein zweiter Bolzen 64 befestigt ist, der den dritten Teilbereich 44 des Reaktormoduls 34 hält. Die Halterung 60 ist in den Figuren 5 und 6 gezeigt, wobei Figur 5 eine Draufsicht auf die Halterung 60 für den Reaktormodul 34 ist und Figur 6 einen Schnitt durch die Halterung 60 entlang der Schnittlinie C - C in Fig.5 zeigt. Die Halterung 60 umfasst einen zylindrischen Gehäuseteil 62 und drei Streben 64, 66, 68, die einen zentralen Sockel 70 mit einer Gewindebohrung 72 tragen, in die die beiden Bolzen 62, 64 von den beiden Seiten her eingeschraubt werden können. Durch diese Ausgestaltung der Halterung 60 wird eine im Wesentlichen ungehinderte Strömung durch die Halterung 60 gewährleistet.

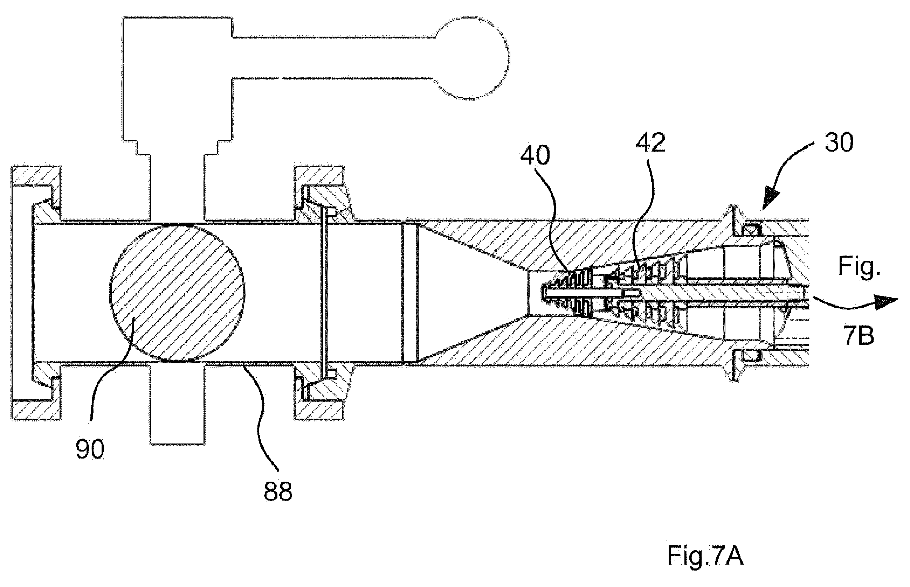

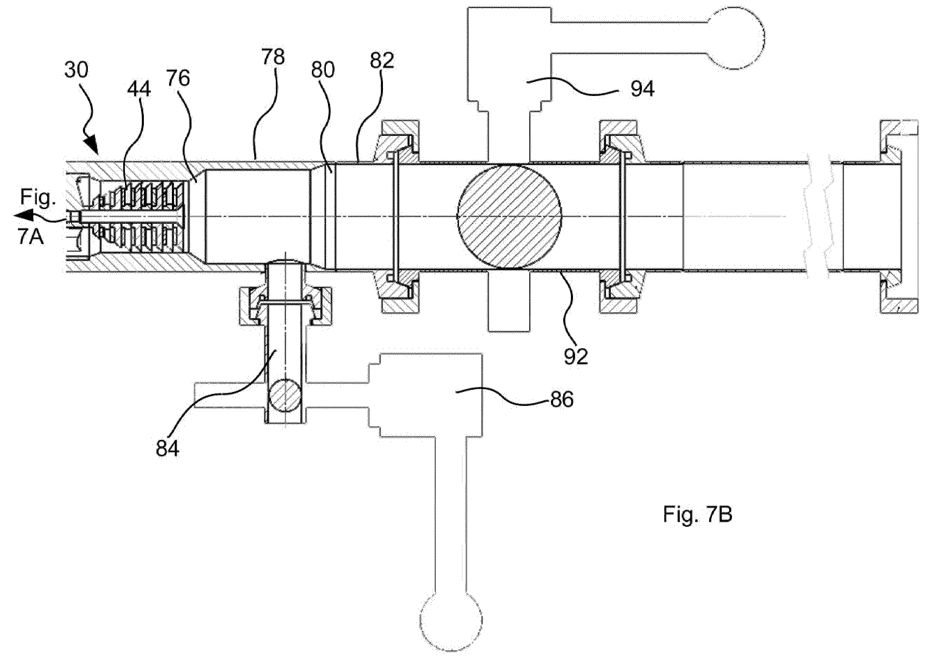

Die Figuren 7A und 7B zeigen nach Zusammenfügung eine Schnittdarstellung des Kavitationsreaktors 30 nach Figur 4 in einem Einbauzustand. Daraus ist zu erkennen, dass das Gehäuse 32 stromauf von dem ersten Teilbereich 40 des Reaktormoduls 34 einen in Strömungsrichtung sich verengenden Zulauftrichter 74 umfasst, und dass das Gehäuse 32 stromab von dem dritten Teilbereich 44 einen in Strömungsrichtung sich ausdehnenden Übergangsbereich 76 und darauf folgend einen zylindrischen Wandbereich 78 aufweist. An den zylindrischen Wandbereich 78 schließt sich ein in Strömungsrichtung sich ausdehnender weiterer Übergangsbereich 80 und darauf folgend ein weiterer zylindrischer Wandbereich 82 an. Gemäß Figur 7B sind der Zulauftrichter 74, die Übergangsbereiche76 und 80 sowie die zylindrische Wandbereiche 78 und 82 Bestandteil des Kavitationsreaktors 30, was entsprechend auch für den Kavitationsreaktor 2 nach dem ersten Ausführungsbeispiel gilt.

An dem Wandbereich 78 ist eine Leitung 84 angesetzt, die mit einem Ventil 86 ausgestattet ist und zur Ableitung eines Reinigungsmittels im Falle der Reinigung des Kavitationsreaktors bestimmt ist. Stromauf von dem Kavitationsreaktors 30 ist eine Zulaufrohr 88 mit einem Absperrventil 90 angeschlossen, während stromab des Kavitationsreaktors 30 ein Ablaufrohr 92 mit einem Absperr- und Regelventil 94 angeschlossen ist. Das Absperr- und Regelventil 94 hat die Funktion, dass durch die teilweise Schließung des Absperr- und Regelventils 94 der Druck des Kavitationsreaktors 30 beeinflusst werden kann, was bei gewissen Substanzen erwünscht ist.

Bei Experimenten hat es sich gezeigt, dass bereits ein Durchlauf der Substanz durch den Kavitationsreaktor zu befriedigenden Ergebnissen führt, beispielsweise bei der Behandlung von Ketschup Substanz oder von kremigen Substanzen. Wenn jedoch ein Durchlauf nicht ausreichend ist, können entweder zwei Kavitationsreaktoren hintereinander geschaltet werden, oder der Kavitationsreaktor wird in ein Kreislaufsystem eingesetzt, sodass der Massenstrom der Substanz im Batch-Betrieb behandelt werden kann, indem er mehrfach durch der Kavitationsreaktor hindurchgeführt und über das Kreislaufsystem wieder eingeführt wird.

Der erfindungsgemäße Kavitationsreaktor eignet sich zum Mischen und/oder Homogenisieren von fließfähigen Substanzen von schwer mischbaren und/oder lösbaren Komponenten, z. B. hydrophoben und hydrophilen Gemischen wie Wasser/Öl, Milch/Fett, Kraftstoff/Wasser, insbesondere zum Mischen, Emulgieren, Dispergieren, Homogenisieren in Systemen, die Strömungskomponenten in Form von festflüssigen oder flüssig-festen oder flüssig-flüssigen oder gasförmig-flüssigen oder flüssig-gasförmigen Phasen. Wenn die Substanzen noch reaktionsfähige Komponenten enthalten, werden diese Komponenten weiterhin zur Reaktion gebracht als eine Art Nachbehandlung der Substanzen. Die Substanzen können auch kremartige oder flüssige Lebensmitteln, kremartige oder flüssige Körperpflegemittel, allgemein Emulsionen oder Suspensionen sein.

Bei dem erfindungsgemäßen Kavitationsreaktor werden mittels turbulenter Strömungen in dem Reaktionsraum hydrodynamische Kräftefelder aufgebaut, dass zur Kavitation bzw. Superkavitation führen und die vielfältig genutzt werden können: Zum einen kann es zur physikalischen Vermischung von schwer mischbaren und/oder lösbaren Komponenten, z. B. hydrophoben und hydrophilen Gemischen wie Wasser/Öl, Milch/Fett, Kraftstoff/Wasser, herangezogen werden. Zum anderen kann die Kavitation eingesetzt werden, um chemische Reaktionen zwischen wenigstens zwei Komponenten einzuleiten oder wenigstens durch die innige Vermischung der Reaktionskomponenten erheblich zu beschleunigen. In Abhängigkeit von der Konzentration beigemengter bzw. gelöster Stoffe (z. B. Gase) können beispielsweise Radikale, reaktive Zwischenstoffe (wie z. B. Polyoxide) erzeugt werden, die als Katalysatoren sowie als Reaktionspartner sowohl Abbau, Aufbau oder Umbau molekularer Verbindungen benutzt werden können. Damit werden Reaktionen von unter Standardbedingungen inkompatiblen (z. B. nicht mischbaren) Komponenten ermöglicht. Allgemeine Beispiele solcher Reaktionen umfassen das Mischen, Emulgieren, Dispergieren, Homogenisieren, und Begasen in Systemen, die Komponenten in Form von fest-flüssig, flüssig-fest, flüssig-flüssig, gasförmig-flüssig, flüssig-gasförmig Phasen umfassen.

Im Folgenden werden zwei Beispiele für die Anwendung des erfindungsgemäßen Kavitationsreaktors genannt, wobei der Druck zum Befördern der Substanz durch den Kavitationsreaktor 2 bar betrug.

Ein Beispiel für Substanzen, die Festteilchen enthalten, sind Farben-Pasten, die bekanntlich Pigmentteilchen als feste Teilchen enthalten. Beim Durchlauf der Farben-Paste durch den Kavitationsreaktor werden die Bestandteile der Farbenrezeptur, zwischen denen keine Reaktion stattfindet, miteinander vermischt und homogenisiert, während die Pigmentteilchen zerkleinert und fein verteilt in die Substanz eingearbeitet werden.

Ein weiteres Beispiel ist die Herstellung von Ketchup nach folgender Rezeptur: Wasser 9,625 kg, Tomatenmark 8,75 kg, Zucker 3,75 kg, Salz 0,625 und Essig 2,25 kg. Eine Substanz nach dieser Rezeptur wurde durch den Kavitationsreaktor nach dem zweiten Ausführungsbeispiel geschickt, wobei bereits nach einem Durchgang ein nahezu perfektes Ergebnis betreffend die Konsistenz und die Haltbarkeit erzielt wurde. Durch einen weiteren Durchgang wurde das Ergebnis weiter verbessert.

## Patentansprüche

1. Kavitationsreaktor zum Behandeln von fließfähigen Substanzen, die aus wenigstens zwei Komponenten besteht, die aufgemischt und/oder zur Reaktion gebracht werden, mit einem rohrförmigen Gehäuse (2, 32), in dem ein schwer umströmbarer Reaktormodul (6, 34) unter Bildung eines Ringraumes (8, 35) zwischen dem Reaktormodul (6,34) und dem Gehäuse (2, 32) über eine Halterung (60) angeordnet ist,
einer Eingangsöffnung (10, 37) für die Zufuhr eines Massestromes, der die zu vermischenden und/oder reagierenden Komponenten enthält, und
eine Ausgangsöffnung (12, 39) für die Abgabe des aus der behandelten Substanz bestehenden Massestroms,
wobei der Reaktormodul (6,34) mehrere schwer umströmbare Scheibenelemente (14; 36,46, 48), die jeweils eine lokale Strömungseinengung bilden und voneinander beabstandet sind, und Zwischenscheiben (16; 55, 57) zwischen den Scheibenelementen (14; 36,46,48) aufweist,
**dadurch gekennzeichnet, dass**
die Scheibenelemente (14; 36,46,48) jeweils mehrere radial verlaufende durch das jeweilige Scheibenelement (14; 36,46,48) hindurch gehende Schlitze (18) aufweist, und dass die Zwischenascheiben (16; 55, 57) die Schlitze der Scheibenelemente (14; 36,46,48) wenigstens teilweise überdecken.

2. Kavitationsreaktor nach Anspruch 1, **dadurch gekennzeichnet, dass** die Scheibenelemente (14; 36,46,48) und die Zwischenscheiben (16, 55, 57) an einem Bolzen (20, 62, 64) gestapelt und befestigt sind, der über die Halterung (60) mit dem Gehäuse (2,30) verbunden ist.

3. Kavitationsreaktor nach Anspruch 1 oder 2, **dadurch gekennzeichnet, dass** der Reaktormodul (6) zwei Teilbereiche (22, 24) umfasst, wobei die Scheibenelemente (14) des stromauf liegenden Teilbereichs (22) weiter von dem Gehäuse (2) beabstandet sind als in dem stromab liegenden und daneben angeordneten Teilbereich (24).

4. Kavitationsreaktor nach Anspruch 1 oder 2, **dadurch gekennzeichnet, dass** der Reaktormodul (34) drei Teilbereiche (40, 42, 44) umfasst, wobei ein erster, stromauf liegender Teilbereich (40) Scheibenelemente (36) mit in Strömungsrichtung zunehmendem Durchmesser bis zu einem ersten Durchmesserwert aufweist, wobei ein zweiter, stromab von dem ersten Teilbereich (40) liegender Teilbereich (42) Scheibenelemente (46) mit in Strömungsrichtung zunehmendem Durchmesser bis zu einem zweiten Durchmesserwert aufweist, uns wobei ein dritter, stromab von dem zweiten Teilbereich liegender Teilbereich (44) Scheibenelemente (48) mit in Strömungsrichtung konstantem Durchmesser bei einem dritten Durchmesserwert aufweist, wobei der zweite Durchmesserwert größer ist als der erste Durchmesserwert, und dass der dritte Durchmesserwert größer ist als der zweite Durchmesserwert.

5. Kavitationsreaktor nach Anspruch 4, **dadurch gekennzeichnet, dass** das Gehäuse (32) in den Bereichen des ersten Teilbereichs (40) und zweiten Teilbereichs (42) den Durchmessern der Scheibenelemente (46, 48) angepasst ist.

6. Kavitationsreaktor nach Anspruch 5, **dadurch gekennzeichnet, dass** die Anpassung in dem zweiten Teilbereich (42) darin besteht, das der Abstand der Scheibenelemente (46) zu einer konischen Innenfläche (50) des Gehäuses (32) konstant ist.

7. Kavitationsreaktor nach Anspruch 5 oder 6, **dadurch gekennzeichnet, dass** die Anpassung in dem ersten Teilbereich (40) darin besteht, dass der Abstand von einem stromab liegenden Teil der der Scheibenelemente (36) zu einer konischen Innenfläche (52) des Gehäuses konstant ist, während ein stromauf liegender Teil der der Scheibenelemente (36), deren Durchmesser in Richtung stromauf abnimmt, in einer zylindrischen Innenfläche (54) des Gehäuses (32) liegt.

8. Kavitationsreaktor nach einem der vorhergehenden Ansprüche, **dadurch gekennzeichnet, dass** das Gehäuse (32) stromauf von dem Reaktormodul (34) einen in Strömungsrichtung sich verengenden Zulauftrichter (74) umfasst.

9. Kavitationsreaktor nach einem der vorhergehenden Ansprüche, **dadurch gekennzeichnet, dass** das Gehäuse stromab von dem Reaktormodul (34) einen in Strömungsrichtung sich ausdehnenden Übergangsbereich (76) und darauf folgend eine zylindrische Wandbereich (78) aufweist.

10. Kavitationsreaktor nach einem der vorhergehenden Ansprüche, **dadurch gekennzeichnet, dass** die Scheibenelemente (14, 36, 46, 48) jeweils eine Scheibe (15) und einen Sockel (17) aufweisen, mit dem sie an dem zugehörigen Bolzen angeordnet sind.
